# EUROPEAN PATENT APPLICATION

(11) **EP 1 188 483 A2**
(43) Date of publication of application: **20.03.2002**
(21) Application number: 01306459.7
(22) Date of filing: 27.07.2001
(51) Int. Cl.: B01L 3/00, G01N 35/00

(54) **Container for holding biological liquids for analysis**

(30) Priority: 30.08.2000 US 651137
(71) Applicant: Wardlaw Partners LP, Lyme, CT 06371 (US); Levine, Robert Aaron, Guilford, Connecticut 06437 (US)
(72) Inventor: Wardlaw, Stephen C., Lyme, Connecticut 06371 (US)
(74) Representative: Leckey, David Herbert

(57) **Abstract**

A container (10) for holding a biologic fluid sample for analysis is provided. The container includes one or more chambers (14) in which the sample quiescently resides during analysis, a reagent vehicle (16) disposed in at least one of the chambers (14) at a known spatial location, and a label (18) attached to the container (10). The one or more chambers (14) each include a first wall and a transparent second wall. Sample quiescently residing within a chamber (14) may be analyzed through the second wall. The reagent vehicle (16), which includes one or more reagents to be admixed with the sample, substantially secures the reagent or reagents in the known spatial location for a useful period of time. The label (18) directly or indirectly contains information that has utility in the analysis of the biologic fluid, including information such as the spatial location of the reagent vehicle (16).

## Description

The present invention relates to methods and apparatus for analyzing biologic fluid samples in general, and to methods and containers for holding a biologic fluid sample during analytical procedures in particular.

Many analytical methods for evaluating biologic fluid samples require that the sample be substantially diluted prior to evaluation. A typical chemical analysis, for example, involves placing a substantially diluted sample into a transparent cuvette of known dimensions and constant light path for evaluation. The cuvette can be made from glass or a hard acrylic that is ground or otherwise manufactured to tight tolerances. The tight tolerances, which are necessary to insure the accuracy of the light path through the cuvette, also make the cuvette undesirably expensive. In addition, the cuvette must be purged of the biologic fluid sample and thoroughly cleaned prior to reuse to avoid contaminating subsequent analyses. Substantial dilution can also increase the likelihood of error, the complexity of the analysis, and the per analysis cost.

Other analytical methods minimize the above-described problems by employing a disposable sample analytical chamber. In one such chemical analytical method, the biologic fluid sample is placed in a flexible sealed pouch where it remains during the analysis. The analytical instrument forms the flexible pouch into a cuvette of desired thickness at the time of measurement to control the light path dimensions. This approach avoids the need for a high precision container that must be cleaned prior to reuse, but requires a diluent volume and is restricted to standard measurements of light transmission. Other methods for performing a chemical analysis on a biologic fluid sample employ single or multiple test film substrates. The test film substrates also avoid the problems associated with dilution and cleaning, but require that the associated disposable always have identically located analytical regions. If the desired information is not present in the predetermined analytical areas, then the test film substrate will not yield useful information because the traditional reader only looks for a signal over a specific region. Moreover, if the container is of an unknown type, it cannot be properly read.

Serologic or immunologic analyses measure soluble substances in blood, usually proteins such as specific immunoglobulins. These tests are often performed by mixing the sample with a sensitized particulate (e.g., latex) that will agglutinate in the presence of the protein of interest. Quantitative immunochemical analysis can be performed using enzymatically linked color changes such as ELISA, or by methods such as fluorescence polarisation. All of these methods are performed on apparatus specialized for their use, which are separate and different from apparatus currently used for chemical analysis of biologic fluid samples.

In short, presently available analytical apparatus are typically limited to a single test or a small group of tests that employ a particular analytical methodology. They are limited further in their ability to adapt to test conditions and have no ability to perform multiple similar tests or multiple tests employing different analytical methodologies within the same general disposable container. Currently available analytical containers also typically require a separate addition of sample for each test area, which complicates the design of an automated instrument for loading and reading the tests.

What is needed is a single container for holding a biologic fluid sample that has utility for multiple analyses using a single methodology or multiple methodologies, one in which multiple analyses can be performed on the same quiescent sample in one instrument thereby providing a common operator interface, one that is operable with a single substantially undiluted biologic fluid sample, and one that can be used effectively as a disposable.

It is, therefore, an object of the present invention to provide a container for holding a biologic fluid sample that permits multiple chemical analyses on a single sample introduced into the container.

It is another object of the present invention to provide a container for holding a biologic fluid sample for analysis that is operable for analyses that require information related to the bulk and/or chemical properties of the sample.

It is another object of the present invention to provide a container for holding a biologic fluid for analysis that is operable using multiple analytical methodologies including but not limited to particulate analysis, chemistry, immunochemistry, serology, immunology, and urinalysis.

According to the present invention, a container for holding a biologic fluid sample for analysis is provided. The container includes one or more chambers in which the sample quiescently resides during analysis, a reagent vehicle disposed in at least one of the chambers at a known spatial location, and a label attached to the container. The term "quiescent" is used to describe the fact that the fluid sample remains motionless in the chamber during analysis of one or more regions of the sample. The only possible motion within the fluid sample under these conditions is microscopic Brownian motion of formed constituents residing within the sample, and that motion is inconsequential and therefore non-disabling for the present invention. In a preferred embodiment, the one or more chambers each include a first wall and a transparent second wall. A sample quiescently residing within a chamber may be analyzed through the second wall. The reagent vehicle, which includes one or more reagents to be admixed with the sample, substantially secures the reagent or reagents in the known spatial location for a useful period of time. The label directly or indirectly contains information that has utility in the analysis of the biologic fluid, including information such as the spatial location of the reagent vehicle.

In a further preferred embodiment, the container further includes a reservoir for holding a quantity of sample isolated from the one or more chambers. The reservoir can be connected directly to a chamber, or can be connected to one or more chambers by one or more channels. A valve functionally disposed between the reservoir and the one or more chambers permits the selective passage of sample from the reservoir into the one or more chambers. For certain analyses, as will be discussed below, the selective release of the sample into a chamber enables analyses to be done as a function of time.

A preferred analytical device for use with the present invention container will include a reader module, a transport module, and a programmable analyzer. The reader module would include optics operable to analyze a field within a chamber, and apparatus to access information through the label attached to the container. The transport module would include apparatus for moving the container relative to the reader module, or vice versa. The programmable analyzer is programmed with instructions to coordinate the operation of the reader module and transport module according to a variety of analysis algorithms.

An advantage of the present invention container is that it is possible to utilize a plurality of different analytical methodologies (e.g., particulate analysis, chemistry, immunochemistry, serology, urinalysis, immunology) in the analysis of a single sample. Using many traditional methods, only one test can be performed on a sample held within a disposable container. Additional tests employing different analytical methodologies require additional samples in new containers, and very often, additional analytical devices as well. The present container, in contrast, can accommodate multiple analyses using one or more methodologies on a sample in a container, using one analytical device. A person of skill in the art will recognize that it is common to perform batteries of related tests on fluid samples, and that there is great utility in being able to perform any one of those batteries on one sample in one container in one analytical device.

The ability of the present container to be used in tests utilizing different analytical methodologies provides significant advantages. One advantage is that the amount of equipment required to do the same number of analyses is reduced significantly. It follows that the cost of procuring and maintaining, and training personnel to operate that equipment is similarly reduced. Another advantage is the increased accessibility the present container helps provide. Many clinical offices and laboratories are presently unable to justify the office space and expense associated with available test apparatus for each analytical discipline. With the versatile present invention, however, it will be possible to have greater in-house analytical ability and therefore greater accessibility to immediate clinical test data.

Another advantage of the present container is the adaptability it provides to various clinical circumstances. The present container can be set up with a plurality of reagent vehicles to accommodate, for example, a wide range of analyate concentrations. The one or more chambers of the present container and the reagent vehicles located at known spatial locations within those one or more chambers, enable the analytical device to locate one or more analysis sites in the same or separate chambers (each site potentially having different analysis parameters including the type of reagent, the concentration of reagent within the sample, etc.) to perform one or more tests on the same sample using the same container and analytical device. Likewise, the adaptability of the present container also facilitates the collection of optimum quantitative photometric information from the sample. If the analytical device determines that test conditions are unfavorable at a particular known spatial location within a chamber, the spatial locations of alternative sites within the same chamber or a different chamber can be provided via the label, thereby enabling the analytical device to test elsewhere and determine the optimum test region available. Another advantage of the present invention is that the present container can be readily configured as a disposable that is independent of the analytical device. The container utilizes a standardized exterior configuration so that the analytical device can be set up to receive a "generic" container that can be configured with a variety of chambers and reagent vehicles to permit any combination of tests. In addition, in disposable form the present container obviates the need to clean the sample chamber after each use and therefore the opportunity for contamination from the prior sample. The present container also facilitates safe handling of the biologic fluid sample for the test operator by minimizing contact with all fluids.

Another advantage of the present invention container is that it uses a relatively small volume of biologic fluid rather than a large volume of significantly diluted biologic fluid. A person of skill in the art will readily recognize the advantages of avoiding the plumbing and fluid controls associated with most flow cytometers or chemical analyzers that require relatively large volumes of diluted sample, as well as the advantages of avoiding the dilution steps, the dilution hardware, and the need for diluent.

These and other objects, features and advantages of at least a preferred embodiment of the present invention will become apparent in light of the detailed description of the invention, and the accompanying drawings, in which:
FIG. 1 is a diagrammatic top view of the present invention container.
FIG.2 is a cross-sectional view of the container shown in FIG.1.
FIG.3 is a diagrammatic view of an analytical device with which the present container may be used.

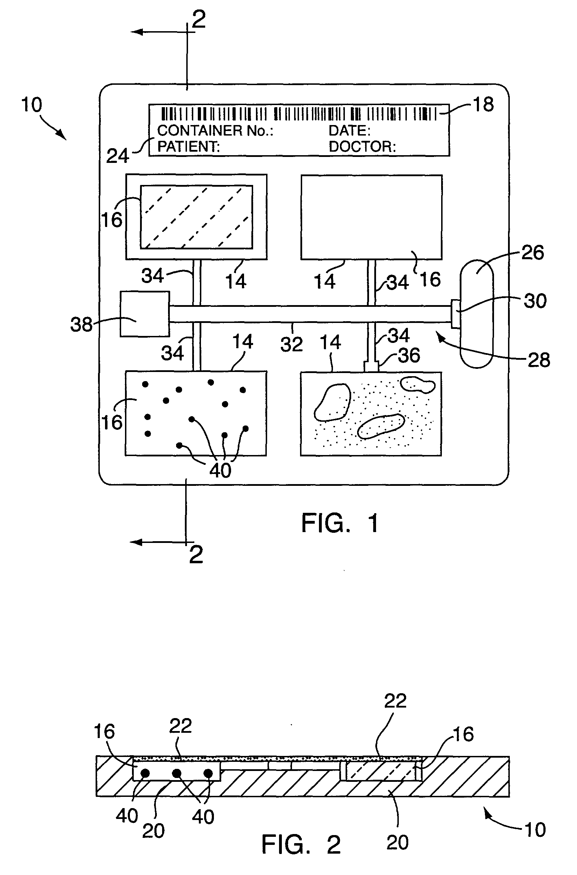

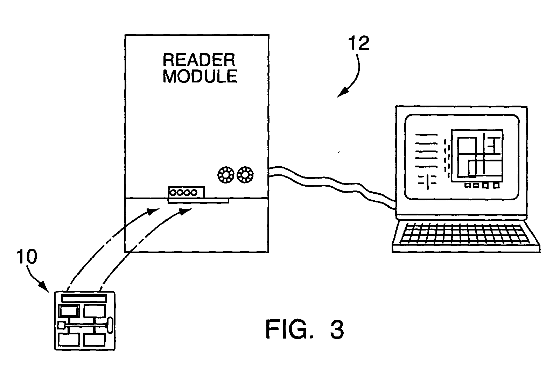

Referring to FIGS. 1-3, a container 10 is provided for holding a biologic sample in a manner that enables analysis of that sample by an analytical device 12 (see FIG.3). The container 10 includes one or more chambers 14, a reagent vehicle(s) 16 disposed at a known spatial location within at least one of the chambers 14, and a label 18 attached to the container 10. In some embodiments, the spatial location of one or more chambers 14 is also known. The embodiment shown in FIG. 1 includes four chambers 14 and a plurality of reagent vehicles 16 disposed in one or more chambers 14 as will be described in the examples below. The chambers 14 each preferably include a first wall 20 (FIG.2) and a transparent second wall 22 through which the sample may be analyzed. The first wall 20 may also be transparent to permit light to pass through the chamber 14. The present container 10 can be configured to accommodate a variety of data collection methods including, but not limited to, optical imaging, reflectance spectroscopy, transmittance spectroscopy, fluorescence and fluorescence polarization, and other methods that can be performed at specific locations within a chamber 14. In those embodiments where the container 10 has more than one chamber 14, the chambers 14 are in fluid contact with one another. Multiple chambers 14 may be independent of one another, or formed by dividing a chamber 14 into sub-chambers.

The reagent vehicle 16 or vehicles each include one or more reagents carried by a solid, semi-solid, or gel substrate. The reagents are designed to react with one or more analyates present within the biologic sample. The reagent vehicle 16 is positioned within the chamber at a predetermined spatial location describable as a coordinate address; e.g., x, y. The advantage of a coordinate address system is that the chamber 14 can be mapped in a coordinate grid with a locatable origin that orients the analytical device 12 relative to the container 10. The reagent vehicle 16 may be sized to occupy a portion or all of a chamber 14. Acceptable reagent vehicles 16 include, but are not limited to, dry test films such as a porous pad incorporated with a single reagent, or a multiple layer test film incorporated with a plurality of reagents. A variety of test films are known and the exact film or films used with the present container 10 will depend on the test(s) at hand. Other acceptable reagent vehicles 16 include reactive beads such as optodes for the measurement of ionic species or ligand coated beads or other substrates for use in an immunoassay, such as for the analysis of TSH using a "sandwich" immunoassay, or T4, using a competitive immunoassay. It is also possible, although less desirable, to employ one or more liquid reagents contained within a selectively dischargable chamber residing within the container that can be actuated by the analytical device as the sample is introduced.

The label 18 is a mechanism for directly or indirectly communicating information to the analytical device 12 that has utility in the analysis of the biologic fluid. The label 18 is preferably a bar code, magnetic strip, or other machine-readable type medium. Information "directly" contained within the label 18 is readable from the label 18 itself. Information "indirectly" contained within the label 18 is accessible by the analytical device 12 (e.g. by network link, modem, etc.), wherein the label 18 directs the analytical device 12 to that source. The information having utility in the analysis of the biologic fluid sample can be anything that provides utility; e.g., the spatial location of a reagent vehicle 16 within a chamber 14 (or multiple reagent vehicles 16 in one or more chambers 14), spatial locations of preferred analysis sites within a chamber 14 or chambers, reagent types at a particular spatial location, concentration of a reagent, etc. The container 10 may also include a human readable label 24 to facilitate handling within the laboratory or clinic. The human readable label 24 may include information such as the patient's name, a sample taken date, an office address, an appropriate warning (e.g., "Biohazard - Handle with Care"), trademarks, etc.

In a preferred embodiment, the container 10 further includes a reservoir 26 for holding a quantity of sample isolated from the one or more chambers 14. The reservoir 26 can be connected directly to a chamber 14, or more typically is connected to the reservoir 26 by one or more channels 28. A valve 30 functionally disposed between the reservoir 26 and the one or more chambers 14 permits the selective passage of sample from the reservoir 26 into the chambers 14. As used herein, the term "valve" includes any means for selectively permitting fluid flow from the reservoir 26 to the chamber(s) 14. For example a frangible membrane disposed between the chamber(s) 14 and the reservoir 26 that can be ruptured by force applied by the analytical device 12 is one acceptable type of valve. A deformable plug that opens when force is applied is another type of acceptable valve. A valve 30 could also be created using pressure differentials, e.g. by moving a diaphragm within the container 10 or supplying positive or negative pressure from the analytical device to a port on the container 10, where the pressure acts to force fluid from one portion of the container 10 to another. For certain analyses, as will be discussed below, the selective release of the sample into chamber 14 enables analyses to be done as a function of time. The reservoir 26 is sized to hold an amount of the sample sufficient to satisfactorily wet and/or saturate the reagent vehicle(s) 16 in the one or more chambers 14.

Referring to FIG.1, in a container 10 having a plurality of chambers 14 or sub-chambers, a main channel 32 leading from the reservoir 26 connects to a plurality of smaller distribution channels 34, which in turn connect to the chambers 34 or sub-chambers. The main channel 32 allows free flow of fluid sample along its entire length. In some embodiments, the distribution channels 34 may also be sized to allow free flow of fluid. In other embodiments, the cross-sectional area of each distribution channel 34 is small enough such that fluid sample is drawn out of the main channel 32 and into the individual distribution channels 34 by capillary forces acting on the fluid sample. In these embodiments, the fluid sample in each distribution channel 34 can be prevented from passing through the distribution channel 34 by including a widened section 36 within that channel 34. The capillary forces acting on the fluid sample are less within the widened section 36, and in the absence of any other external force are insufficient to move the fluid sample further within the distribution channel 34. When the analytical device 12 is activated to analyze the fluid sample, positive pressure applied to the reservoir 26 (or negative pressure applied to the chambers 14) will force the fluid sample residing within the distribution channels 34 out of those channels and into chambers 14. In these embodiments, the distribution channel 34 and the widened section 36 therein function as a portion of the valve 30.

Fluid flow through the channels 28 of the container 10 can be accomplished by means other than capillary action and the present container 10 is not, therefore, limited to capillary induced flow. Examples of alternative means for producing fluid flow include positive or negative pressure provided by the operator, or a fluid flow device incorporated directly into the container 10 (e.g. a bellows-like device), or by an independent mechanism incorporated into the analytical device 12 that produces fluid flow within the container 10 In some embodiments, it may be desirable to have a sealed section containing a standard or control, or reagents, and that scaled section can be opened to allow fluid flow thereto by the analytical device 12.

If an analysis requires the addition of an accurate amount of fluid sample to a test film, the above-described arrangement of a main channel 32 coupled with a plurality of distribution channels 34 can be used if the volume of the distribution channels 34 is controlled. Each distribution channel 34 draws fluid sample from the main channel 32 until it is filled. Excess fluid sample remaining within the main channel 32 can be drawn off into a waste area 38 containing an absorbent batting or other means for handling excess fluid sample. Since the volume of each distribution channel 34 is controlled and known and excessive fluid is removed, the amount of fluid sample subsequently forced into each chamber 14 is accurately metered. Other means for accurately metering the fluid sample and delivering it to the chamber 14 may be used alternatively.

As stated above, the considerable utility of the present container 10 enables a wide variety of analyses to be performed on a single sample, using a single analytical device.

The examples given below are offered so that a complete appreciation of the present invention container 10 may be gained.

### Example I: Film-Based Chemical Analyses

Referring to FIGS. 1-3, for film-based chemical analyses, the container 10 will likely include a reservoir 26 connected to a plurality of chambers 14 by a valve 30 and channel 28 arrangement. A sample of biologic fluid from a single patient is placed into the reservoir 26 and the container 10 is placed into the analytical device 12, which device is set up to handle the standardized exterior of the container 10. Prior to performing the analysis or analyses, the analytical device 12 reads the container's machine-readable label 18 to determine information such as the correct analysis sequence, the spatial location of reagent vehicles 16 within the chambers 14, spatial locations of preferred analysis sites within the chambers 14, types of reagent at particular locations, concentration of a reagent, etc.

The analysis is initiated by actuating the valve 30 to release the sample into the chambers 14. If the tests are time dependent, a timer is initiated when the valve 30 is actuated or some predetermined time thereafter. The container 10 can include multiple valves 30 if necessary to facilitate an ordered sequence of events. Information provided directly or indirectly by the label 18 (e.g. analytical algorithms, chamber 14 coordinate locations, optical wavelength information, etc.) enables the analytical device 12 to position its optical reading means at a predetermined spatial location over the chamber 14 where the first analysis is to be completed. In the analysis, light reflected from the sample at a specified wavelength(s) is read and the information is analyzed using the analytical algorithm(s). Other analyses may use alternative methods for collecting useful data. After the reading is complete, the optical reading means of the analytical device 12 is moved to another known spatial location within the same chamber 14 or a different chamber 14 to perform the next reading, until all of the desired analyses are completed.

Note that the optical reading means of the analytical device 12 can be "actually" or "virtually" positioned relative to the reagent vehicles 16 within the one or more chambers 14 of the container 10. For example, one of the optical reading means or the container 10 can be moved relative to the other from one coordinate position (e.g. X₁,Y₁) to a second coordinate position (e.g. X₂,Y₂) to enable analyses at different known spatial locations (in the same or different chambers 14). Alternatively, if the analytical device 12 has a large imaging device (e.g. a scanner-type reading head) then the container 10 and the optical reading means can stay fixed relative to one another and the move between known spatial locations can be accomplished "virtually". Virtual positioning is possible when all of the light reflected from the chamber 14 or chambers within the container 10 is collected simultaneously, and only that portion attributable to a particular known spatial location is considered for a given analysis. In fact, the portion collected at the particular spatial location can be further limited to one or more select wavelength(s) useful for a first analysis. Other wavelengths collected at the same spatial location can be used for other analyses.

### Example II: Mixed Film and Other Analyses

In many clinical instances, it would be highly desirable to not only perform the above described chemical analyses on a sample, but also have the option to perform other analyses using different methodologies on that same sample. To accomplish that, the container 10 embodiment described above can be configured to further include analysis chambers 14 containing other means for enabling an analysis of the sample; e.g. chambers 14 that contain non-film type reagent vehicles 16 that can react with the analyate in the sample, or other chambers 14 configured to permit particulate analysis on that same sample. For example, immunochemical tests using reactive beads 40 have been widely described in the literature, where the sample analyate binds to the beads 40 and to a tagged ligand causing the beads 40 to change their color or fluorescence. One or more chambers 14 in the disposable could be filled with the reactive beads 40 and tagged ligand instead of the dry film, and in such ease the label 18 would provide information pertaining to the beads 40 including the spatial locations of the chambers 14 in which they are disposed (and/or the locations of the beads 40 themselves).

A further example of a clinically useful group of tests that utilize different analytical methodologies, and which can be performed on a single sample using the present container 10, are those that are used to determine the cause of anaemia. To test for anaemia, the container 10 could include a first chamber 14 configured for particulate analysis such as the enumeration of the reticulocytes, a second chamber 14 containing a film-based chemistry to measure iron content, a third chamber 14 containing an immunochemical competitive ligand assay chamber to measure ferritin, and a fourth chamber 14 containing an immunochemical sandwich assay to measure erythropoetin. Thus, a single disposable container 10 could be used in each of the analyses used to establish a diagnosis for the cause of anaemia. In addition, since it is possible with the present container to have all the results available at the same time in a single analytical device 12, the results could then be automatically evaluated by an expert system.

Another advantage of the present container 10 is that it can be configured to help provide optimum analysis parameters. In a competitive ligand immunochemical test, for example, the optimum test range is determined in part by the ratio of ligands (binder and analyate). Samples with widely varying concentrations of analyates may not be measured effectively when only one quantity of binder ligand is present. This problem can be overcome if a disposable container 10 includes a number of chambers 14, each having differing quantity of binder, ensuring that at least one chamber 14 contains an acceptable amount of binder for the analyate concentration at hand, and the spatial locations of the chambers 14 and the amounts and/or concentrations of binder contained therein are communicated to the analytical device 12 via the label 18. In the case of thyroid stimulating hormone (TSH), for example, patient samples can range from less than 0.1 µIU/ml to over 20 µIU/ml. If an analytical chamber is set up to effectively measure lower concentrations, a sample fluid bearing a high concentration of TSH will saturate the reaction and prevent the collection of useful information. Using traditional methods, a fluid sample with a higher than desired analyate concentration is typically diluted and analyzed again. The present container 10, in contrast, can eliminate the need for dilution in most cases by providing a plurality of different reagent concentrations at known spatial locations in one or more chambers 14. The label 18 provides the appropriate alternative spatial locations and reagent concentrations to the analytical device 12. As a result, the analytical device 12 can overcome the saturated condition by moving to an alternative reagent site having a reagent to analyate ratio more favorable to the concentration being measured.

Although this invention has been shown and described with respect to the detailed embodiments thereof, it will be understood by those skilled in the art that various changes in form and detail thereof may be made without departing from the scope of the invention.

## Claims

1. A container for holding a biologic fluid sample for analysis, said container comprising:
a chamber (14) having a first wall (20) and a transparent second wall (22) for quiescently holding said sample, wherein said sample residing within said chamber (14) may be analyzed through said second wall (22);
a reagent vehicle (16) disposed at a known spatial location within said chamber (14), said reagent vehicle (16) having one or more reagents capable of admixing with said sample; and
a label (18) attached to said container, said label (18) containing information having utility in said analysis, said information including said known spatial location of said reagent vehicle (16).

2. The container of claim 1, further comprising:
a reservoir (26) for holding said biologic fluid sample prior to said analysis; and
a valve (30);
wherein said valve (30) selectively permits passage of said biologic fluid sample from said reservoir (26) to said chamber (14).

3. The container of claim 1 or 2, wherein said reagent vehicle (16) comprises a dry test film.

4. The container of any one of claims 1 to 3, wherein said container comprises a plurality of said chambers (14).

5. The container of claim 4, further comprising:
a reservoir (26) for holding said biologic fluid sample prior to said analysis; and a valve (30);
wherein said valve selectively permits passage of said biologic fluid sample from said reservoir (26) to said chambers (14).

6. The container of claim 4 or 5, further comprising a plurality of said reagent vehicles (16), wherein each said chamber (14) includes one of said reagent vehicles (16) and each said reagent vehicle (16) enables a different method analysis of said sample.

7. A container for holding a biologic fluid sample for analysis, said container comprising:
a first chamber (14) for quiescently holding said sample;
a first reagent vehicle (16) disposed at a known spatial location within said first chamber (14), said first reagent vehicle (16) enabling a first analysis of said sample;
a second chamber for quiescently holding said sample;
a second reagent vehicle disposed at a known spatial location within said second chamber, said second reagent vehicle enabling a second analysis of said sample,
wherein said first and second analyses of said sample use different analytical methodologies; and
a label (18) attached to said container, said label (18) containing information having utility in said analyses, said information including said known spatial locations.

8. A container for holding a biologic fluid sample for analysis, said container comprising:
a first chamber (14) for quiescently holding said sample;
a first means for enabling a first analysis of said sample, said first means disposed at a known spatial location within said first chamber;
a second chamber for quiescently holding said sample;
a second means for enabling a second analysis of said sample, said second means disposed at a known spatial location within said second chamber;
wherein said first and second analyses utilize methodologies selected from the group consisting of particulate analysis, chemistry, serology, urinalysis, immunochemistry, and immunology, and said first analysis utilizes a different methodology than said second analysis; and
a label (18) attached to said container, said label (18) containing information having utility in said analyses, said information including said known spatial locations.

9. The container of claim 7 or 8, further comprising:
a reservoir (26) for holding said biologic fluid sample prior to said analyses: and
means for selectively permitting passage of said biologic fluid sample from said reservoir (26) to said chambers (14).

10. The container of claim 7 or 8, further comprising:
a reservoir (26) for holding said biologic fluid sample prior to said analyses: and a valve (30);
wherein said valve (30) selectively permits passage of said biologic fluid sample from said reservoir (26) to said chambers (14).

11. The container of claim 9 or 10, further comprising a plurality of channels (28) connecting said reservoir (26) to said chambers (14).

12. The container of claim 11, wherein said plurality of channels (28) include a main channel (32) connected to said reservoir (26) and a plurality of distribution channels (34) disposed between said main channel (32) and said chambers (14).

13. The container of any one of claims 9 to 12, wherein said container further comprises means for driving said fluid sample from said reservoir (26) into said chambers (14).

14. The container of claim 12 and 13, wherein said means for driving said fluid sample includes said distribution channels (34) having a cross-section sized to permit the creation of capillary forces on said sample fluid.

15. The container of any preceding claim, further comprising a means for handling excess fluid sample.

16. The container of any preceding claim, further comprising a means for metering said fluid sample entering said chambers.

17. A container for holding a biologic fluid sample for analysis, said container comprising:
at least two chambers (14) disposed at different spatial locations within said container, each said chamber (14) having a first wall (20) and a transparent second wall (22), wherein said sample quiescently resides between said walls during said analysis;
one or more reagent vehicles (16) disposed in said chambers (14), each said reagent vehicle (14) having one or more reagents capable of admixing with said sample; and
a label (18) attached to said container, said label (18) containing information having utility in said analysis, said information including said known spatial locations.

18. A method for analyzing a biologic fluid sample, comprising the steps of:
quiescently holding said biologic fluid sample in a plurality of chambers (14) disposed in a container;
providing means for enabling a plurality of analyses at known spatial locations within said chambers, wherein said means for enabling said analyses utilizes different methodologies in different said chambers (14); and
reading a label (18) attached to said container, said label (18) directly or indirectly containing information having utility in said analyses, including said known spatial locations; and
optically evaluating said biologic fluid sample residing at said known spatial locations using said means for enabling said analyses, wherein said optical evaluation directly or indirectly provides results for said analyses.

19. The method of claim 18, wherein said analyses utilize methodologies selected from the group consisting of particulate analysis, chemistry, serology, urinalysis. immunochemistry, and immunology.

20. A container for holding a biologic fluid sample for analysis, said container comprising:
a chamber (14) for quiescently holding said sample, said chamber (14) having a first wall (20) and a transparent second wall (22), wherein said sample residing within said chamber (14) may be analyzed through said second wall (22);
a reagent vehicle (16) disposed within said chamber (14), said reagent vehicle (16) having one or more reagents capable of admixing with said sample; and
a label (18) attached to said container, said label (18) containing information having utility in said analysis, said information including said known spatial location of said chamber (14).

21. A container for holding a biologic fluid sample for analysis, said container comprising:
a chamber (14) for quiescently holding said sample;
a means for enabling a first analysis of said sample, said means disposed at a known spatial location within said chamber (14); and
a label (18) attached to said container, said label (18) containing information having utility in said first analysis, said information including said known spatial location.
